# EUROPEAN PATENT APPLICATION

(11) **EP 3 576 396 A1**
(43) Date of publication of application: **04.12.2019**
(21) Application number: 18174973.0
(22) Date of filing: 29.05.2018
(51) Int. Cl.: H04M 9/00, H04M 3/42, H04Q 3/72

(54) **METHOD FOR ALLOCATING A TELEPHONE NUMBER TO A TELEPHONE LINE, AND NETWORK OF TELEPHONE LINES**

(71) Applicant: Isik, Mehmet Hanefi, 7542 EL Enschede (NL)
(72) Inventor: Isik, Mehmet Hanefi, 7542 EL Enschede (NL)
(74) Representative: Bartelds, Erik

(57) **Abstract**

The invention relates to a method for allocating a telephone number to a telephone line, comprising the steps of:
- providing a list of countries;
- allocating country codes to the countries on the list;
- providing a telephone line at a geographical location, comprising at least a host country;
- allocating a telephone number to the provided telephone line, composed of:
a) an international access code, such as for instance 00;
b) a country code determined on the basis of the host country; and
c) a number specific to the line, preferably composed of:

- an area code determined on the basis of the geographic location or a mobile phone provider, or a service code determined on the basis of the type of line; and
- a subscriber number, wherein, on the list of countries, at least one group of countries forming an alliance are grouped into an allied group and wherein the allied group is allocated the same country code in the allocation of the country codes.

## Description

The invention relates a method for allocating a telephone number to a telephone line, comprising the steps of:
- providing a list of countries;
- allocating country codes to the countries on the list;
- providing a telephone line at a geographical location, comprising at least a host country;
- allocating a telephone number to the provided telephone line, composed of:
   a) an international access code, such as for instance 00;
   b) a country code determined on the basis of the host country; and
   c) a number specific to the line, preferably composed of:
- an area code determined on the basis of the geographic location or a mobile phone provider, or a service code determined on the basis of the type of line; and
- a subscriber number.

Telephone numbers are currently allocated to telephone lines according to the above stated method. This method has drawbacks.

When a first person wishes to ring a second person, who can be contacted via a telephone line in a first country, via a telephone line which is hosted in the first country, it suffices for the first person to dial the number specific to the line and, if the second person has the same area code, even just the subscriber number.

When this same first person wishes to reach a third person, who can be contacted via a telephone line in a second country, via a telephone line which is hosted in the first country, it is necessary for the first person to enter the country code of the second country prior to other parts of the telephone number, also preceded by an international access code. This is confusing to a user and undesirable in a situation where the first country and the second country form an alliance.

Furthermore, it enables the companies providing telephone lines to charge different prices depending on the countries between which the telephone conversation takes place, which is undesirable when two countries form an alliance.

It is per se known that neighbouring countries which have the same official language can have the same country code. This is for instance the case for the United States and Canada, and for the countries of the United Kingdom.

It is now an object of the invention to reduce or even obviate the above stated problems.

This object is achieved with a method according to the preamble, wherein, on the list of countries, at least one group of countries forming an alliance are grouped into an allied group, and wherein the allied group is allocated the same country code in the allocation of the country codes. These may be countries having different official languages and/or countries which do not share a border.

In that case all countries which form an alliance use the same country code. It is no longer necessary in this case to enter the international access code and the country code for a telephone conversation between people who have telephone lines in different countries, when these countries form an alliance.

In a preferred embodiment of the method according to the invention the allied group is the European Union or Europe.

The European Union or Europe are each alliances which are well suited to application of the method according to the invention. It is possible here that newly acceding member states lose their own country code and/or that seceding member states lose the use of the collective country code.

The European Union or Europe could here for instance be given the country code 02 as collective country code, just as it is currently known that the country code for North America is 1.

In another preferred embodiment of the method according to the invention the area code is composed of a first part, which is allocated on the basis of a province or state in the host country, and a second part, following on from the first part, which is allocated on the basis of the municipality in which the telephone line is provided.

Sub-dividing the area code into two parts makes it possible to specify the geographic location more precisely as the area code progresses.

It is for instance possible for the following area codes to be allocated:
01... Overijssel (Netherlands):
   - 0101 Enschede
   - 0102 Almelo
   - 0103 Zwolle
02... Gelderland (Netherlands):
   - 0201 Arnhem
   - 0202 Nijmegen
03... North Rhine-Westphalia (Germany, which country forms an alliance with the Netherlands, and thereby uses the same country code):
   - 0301 Borken
   - 0302 Essen

It is possible here for a first person to reach another person on a line of which only the second part of the area code differs by choosing only the second part and the subscriber number, wherein it is thus not necessary for this person to dial the first part.

In another preferred embodiment of the method according to the invention the length of the allocated telephone number without the international access code is between 10 and 15 digits long.

It is recommended to keep the allocated telephone number as short as possible so that it is easy for people to remember. The expected number of telephone lines based on the world's population must be taken into account here. It has been found here that a length of 10 or 11 digits should currently provide sufficient options to provide every person wishing so, taking into consideration the size of the world's population, with a telephone number, while at the same time ensuring that telephone numbers are not unnecessarily long and difficult to remember. Additional digits can however be added if necessary.

In a variant of the method according to the invention telephone numbers can be allocated to existing, already numbered telephone lines during a transitional period, and a record can be kept of the existing and newly allocated telephone numbers. During introduction of the system according to the invention it is thus possible during the transition period for the existing telephone numbers to remain active in conjunction with the telephone numbers allocated by application of the method according to the invention.

The invention further relates to a network of telephone lines with telephone numbers which can be obtained with the method according to the invention.

Such a network comprises a central telephone exchange, a number of local telephone exchanges connected to the central exchange, a number of base telephone exchanges connected to each of the local exchanges and a number of telephone lines connected to each of the base exchanges, wherein the local exchanges connected to the central exchange are located in different countries which form part of an allied group.

The allied group can here be the European Union, or even the whole of Europe.

In an embodiment of the network according to the invention the local exchange can be located in a province or state in the host country and have a part of an area code corresponding therewith, and each base exchange can be located in a municipality and have a part of an area code corresponding therewith. The part of the area code determined by the municipality can here follow on from the part thereof determined by the province or state.

In another embodiment of the network according to the invention the central telephone exchange can be a "Mobile Switching Center" (MSC), each of the local telephone exchanges can be an MSC, and each of the base telephone exchanges can be a "Base Station Controller" (BSC), to each of which a number of base stations can be connected, which can in turn be connected to a number of mobile phone lines present within a cell defined by the base station. The methodology of number allocation according to the invention can thus also be applied to a mobile network extending over different countries.

Neighbouring first and second base stations in different countries can here be configured to hand off a mobile phone line moving through the cells defined thereby when a signal strength at the location of the first base station drops to a threshold value for the handoff, which is higher than the minimum acceptable signal strength. In contrast to the current situation, a mobile connection is thus not disconnected when a border is crossed, but the mobile device is handed off to a base station in another country when required by the decreasing signal strength.

Finally, the invention relates to a method for handing off a mobile phone line moving from a cell of a first base station to a neighbouring cell of a second base station, wherein the first and second base station are located in different countries. According to the invention, the mobile phone line is now handed off when a signal strength at the location of the first base station drops to a threshold value for the handoff, which is higher than the minimum acceptable signal strength.

These and other aspects of the invention are further elucidated with reference to the accompanying drawing, in which:
Figure 1 shows a flow diagram of the method according to the invention,
Figure 2 shows the composition of two telephone numbers of landlines in different countries having a collective country code,
Figure 3 shows the composition of two telephone numbers of mobile phone lines in different countries having a collective country code,
Figure 4 shows schematically the structure of a network of mobile phone lines in different countries which have a collective country code and are connected via a collective "Mobile Switching Center" (MSC),
Figure 5 shows schematically how a handoff of a mobile phone line at the location of a border takes place in the current situation, and
Figure 6 shows schematically how a handoff of a mobile phone line at the location of a border takes place when the method and the network according to the invention are applied.

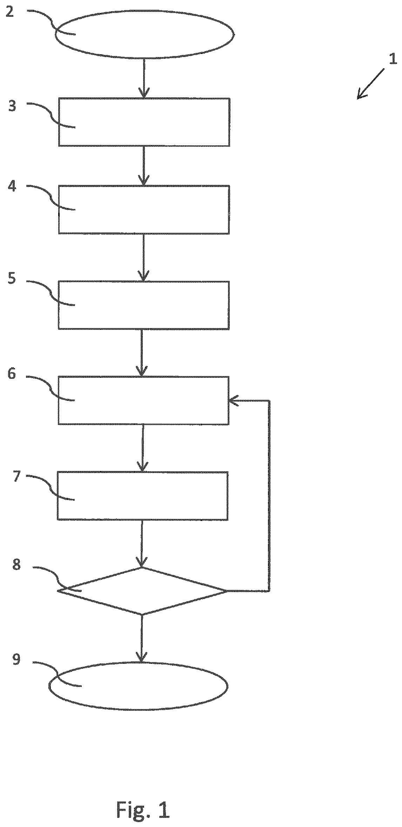

Figure 1 shows a method 1 according to the invention. From start 2, a list of countries is provided in step 3, and allied countries are grouped in step 4. Country codes are then allocated in step 5, wherein at least one allied group is given the same country code. A telephone line is provided in step 6, to which in step 7 a telephone number is allocated according to the method. It is determined in step 8 whether even more telephone numbers have to be provided. If this is the case, step 6 is returned to for this additional phone number. If not, the method ends (step 9). Once steps 3-5 have been completed, these steps need not be repeated.

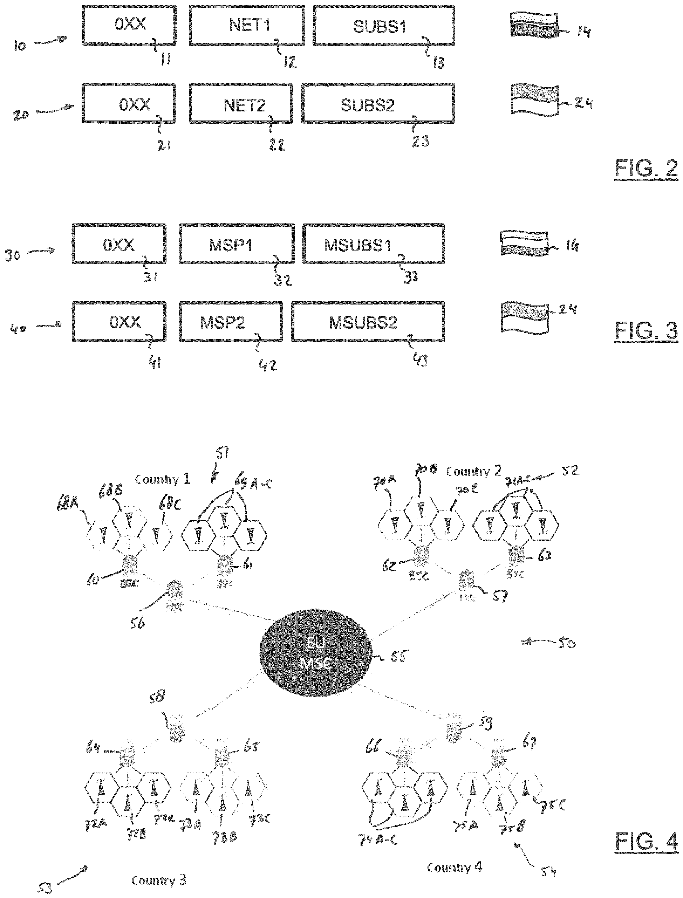

As shown in figure 2, a first telephone number 10 which has been allocated in accordance with the above described method consists in the case of a landline of a country code 11, an area code (NET1) 12 and a subscriber number (SUBS1) 13. The shown telephone number 10 belongs to a line in a first country, shown schematically with its flag 14. A second telephone number 20, likewise allocated according to the above described method, consists of a country code 21, an area code (NET2) 22 and a subscriber number (SUBS2) 23. This second telephone number 20 belongs to a line in a second country, designated with its flag 24.

The lengths of area codes 12, 22 and of subscriber numbers 13, 23 can differ, as shown here, although the total length of the two telephone numbers 10, 20 is the same. In the current situation this total length can amount to 10 or 11 digits, although one or more digits could be added as desired in order to increase the total amount of available numbers.

In addition, the two lines in the two different countries belonging to an allied group of countries, such as the European union, have been given the same country code 0XX. The countries designated with the flags 14, 24 need not share a border, and can have different official languages.

Each area code (NET1, NET2) 12, 22 can consist of a first part 15, 25 allocated on the basis of a province or state in which the telephone line is located, and a second part 16, 26 based on a municipality or city where the telephone in question is hosted.

Figure 3 shows two mobile telephone numbers 30, 40 allocated in accordance with the method as described above. Each mobile number 30, 40 consist of a country code 31, 41, a number (MSP1, MSP2) 32, 42 of the mobile phone provider and a mobile subscriber number (MSUBS1, MSUBS2) 33, 43. It is here also the case that the individual numbers 32, 42 and 33, 43 can have different lengths, but that the total length of the mobile phone numbers 30, 40 is the same.

Figure 4 shows an example of a cross-border mobile network 50 covering a number of countries 51-54 belonging to an allied group and having a collective country code. In the shown example network 50 comprises a central telephone exchange 55, here taking the form of a "Mobile Switching Center" (MSC), a telephone exchange which interconnects mobile users within network 50, between mobile users and landlines and between mobile users and other mobile networks. An MSC further tracks the handoff (to be discussed below) of mobile users from a base station to a subsequent base station, keeps a record of the location of the mobile users, and is responsible for subscriber services and billing.

In each country 51-54 local telephone exchanges 56-59 are connected to this central exchange 55. In the shown example these local exchanges 56, 59 are likewise MSCs. Each local exchange 56-59 is in turn connected to a number of base exchanges 60-67, here each taking the form of a "Base Station Controller" (BSC), an exchange which controls a number of base stations. A BSC distributes radio frequencies among mobile users and provides for the handoffs between the base stations within its operating area. In the shown example each base exchange 60-67 controls three base stations 68A-C, 69A-C, ..., 75A-C. Each base station 68A-C, 69A-C, ..., 75A-C comprises a radio transmitter/receiver which facilitates the contact between the mobile users within a determined area (a "cell") and the mobile network.

Because base stations 68A-C, 69A-C, ..., 75A-C are all connected via base exchanges 60-67 and local exchanges 56-59 to the same central exchange 55, calls between the mobile users within network 50 can be treated as national calls, for which no special provisions are necessary. This further has the advantage that the handoff of a mobile user or line from one base station to the other (also known as "handover") can always take place without a call being interrupted, even when the neighbouring base stations are geographically located in different countries.

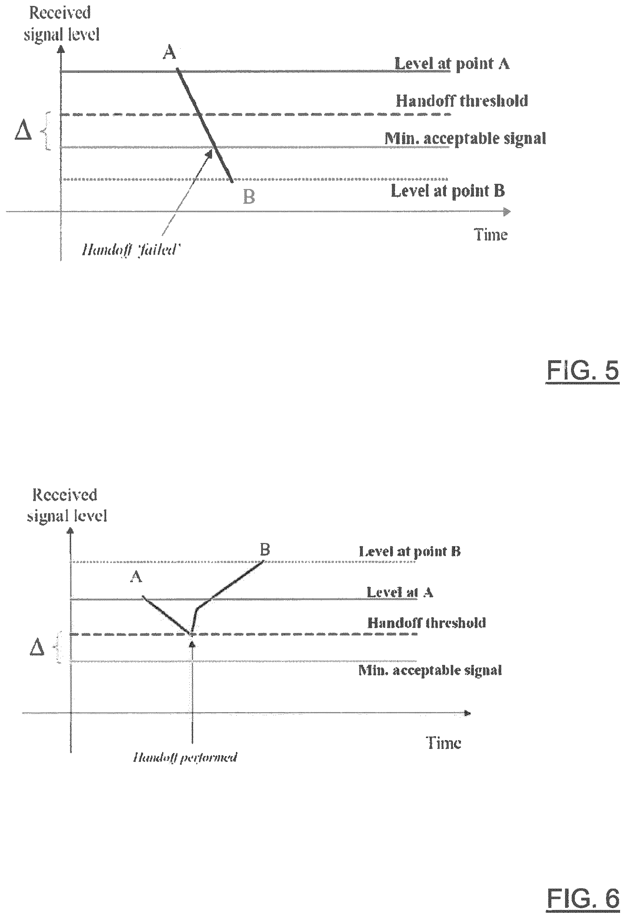

Figure 5 shows how in conventional networks the handoff is not performed when a mobile user is in a border region between two countries so as to avoid the high costs of mobile telephony abroad. The signal strength decreases as the mobile phone line becomes further removed from base station A, and no handoff takes place initially, not even when the signal strength drops below a minimum acceptable level.

Figure 6 shows the handoff in the network 50 according to the invention. The signal strength here likewise decreases as the mobile user becomes further removed from base station A, whereas the signal strength via base station B, toward which the mobile user is moving, increases. When the signal strength from base station A has decreased to a threshold value for the handoff ("handoff threshold"), the mobile user is handed off to base station B, which is located on the other side of a geographical border, i.e. in a different country, under the control of the associated base exchange, local exchange and central exchange. Calls can thus continue normally.

### Example

A person with a telephone line in the municipality of Enschede in the Netherlands can have the telephone number 00 02 101 2222222, composed of the international access code (00), the collective country code for the European Union (02), the area code for Enschede (0101, shortened to 101), and a subscriber number (2222222).

Another person with a telephone line in the same municipality could reach this person simply by dialling the number 2222222.

A person with a telephone line in a different municipality can in any case reach this person via 00 02 101 2222222 or +02 101 2222222. If this person has a telephone line within the European Union, dialling 0101 2222222 will suffice.

Although the invention has been elucidated above on the basis of a number of examples, it will be apparent that it is not limited thereto and can be varied in many ways within the scope of the following claims.

## Claims

1. Method for allocating a telephone number to a telephone line, comprising the steps of:
- providing a list of countries;
- allocating country codes to the countries on the list;
- providing a telephone line at a geographical location, comprising at least a host country;
- allocating a telephone number to the provided telephone line, composed of:
a) an international access code, such as for instance 00;
b) a country code determined on the basis of the host country; and
c) a number specific to the line, preferably composed of:
- an area code determined on the basis of the geographic location or a mobile phone provider, or a service code determined on the basis of the type of line; and
- a subscriber number
**characterized in that**
- on the list of countries, at least one group of countries forming an alliance are grouped into an allied group; and
- the allied group is allocated the same country code in the allocation of the country codes.

2. Method as claimed in claim 1, wherein the allied group is the European Union.

3. Method as claimed in claim 1, wherein the allied group is Europe.

4. Method as claimed in any one of the claims 1-3, wherein the area code is composed of a first part, which is allocated on the basis of a province or state in the host country, and a second part, following on from the first part, which is allocated on the basis of the municipality in which the telephone line is provided.

5. Method as claimed in any one of the foregoing claims, wherein the length of the allocated telephone number without the international access code is between 10 and 15 digits long.

6. Method as claimed in any one of the foregoing claims, wherein telephone numbers are allocated to existing, already numbered telephone lines during a transitional period, and a record is kept of the existing and newly allocated telephone numbers.

7. Network of telephone lines, comprising a central telephone exchange, a number of local telephone exchanges connected to the central telephone exchange, a number of base telephone exchanges connected to each of the local telephone exchanges and a number of telephone lines connected to each of the base telephone exchanges, wherein the local telephone exchanges connected to the central telephone exchange are located in different countries which form part of an allied group.

8. Network as claimed in claim 7, wherein the allied group is the European Union.

9. Network as claimed in claim 7, wherein the allied group is Europe.

10. Network as claimed in any one of the claims 7-9, wherein the local telephone exchange is located in a province or state in the host country and has a part of an area code corresponding therewith, and each base telephone exchange is located in a municipality and has a part of an area code corresponding therewith.

11. Network as claimed in any one of the claims 7-10, wherein the central telephone exchange is a "Mobile Switching Center" (MSC), each of the local telephone exchanges is an MSC, and each of the base telephone exchanges is a "Base Station Controller" (BSC), to each of which a number of base stations is connected, which are in turn connected to a number of mobile phone lines present within a cell defined by the base station.

12. Network as claimed in claim 11, wherein neighbouring first and second base stations in different countries are configured to hand off a mobile phone line moving through the cells defined thereby when a signal strength at the location of the first base station drops to a threshold value for the handoff, which is higher than the minimum acceptable signal strength.

13. Method for handing off a mobile phone line moving from a cell of a first base station to a neighbouring cell of a second base station, wherein the first and second base station are located in different countries, wherein the mobile phone line is handed off when a signal strength at the location of the first base station drops to a threshold value for the handoff, which is higher than the minimum acceptable signal strength.
